**Europäisches Patentamt**

**European Patent Office**

**Office européen des brevets**

(19)

(11) Numéro de publication : **0 085 820**
**B1**

(12) # FASCICULE DE BREVET EUROPÉEN

(45) Date de publication du fascicule du brevet :
21.11.85

(51) Int. Cl.⁴ : **H 04 B   1/66,** H 04 B 14/04

(21) Numéro de dépôt : **82430003.2**

(22) Date de dépôt : **09.02.82**

(54) Procédé de transmission numérique multi-vitesses et dispositif de mise en œuvre dudit procédé.

(43) Date de publication de la demande :
**17.08.83 Bulletin 83/33**

(45) Mention de la délivrance du brevet :
**21.11.85 Bulletin 85/47**

(84) Etats contractants désignés :
**DE FR GB**

(56) Documents cités :
**PROCEEDINGS OF THE 1980 INTERNATIONAL ZURICH SEMINAR ON DIGITAL COMMUNICATIONS, mars 1980, pages E3.1-E3.6, Zürich (CH); G.G. LANGENBUCHER: "Speech interpolation methods with efficient source coding and flexible overload management"**
**CONFERENCE RECORD OF THE 1978 IEEE INTERNATIONAL CONFERENCE ON ACOUSTICS, SPEECH AND SIGNAL PROCESSING, 10-12 avril 1978, pages 299-302, New York (USA); A.J. GOLDBERG: "2400716,000 BPS multirate voice processor"**
**CONFERENCE RECORD OF THE 1978 IEEE INTERNATIONAL CONFERENCE ON ACOUSTICS, SPEECH AND SIGNAL PROCESSING, 10-12 avril 1978, pages 320-325, New York (USA); D. ESTEBAN ET AL: "32 KBPS CCITT compatible split bandcoding scheme"**

(73) Titulaire : **International Business Machines Corporation**
**Old Orchard Road**
**Armonk, N.Y. 10504 (US)**
**DE GB**
**Compagnie IBM FRANCE**
**5 Place Vendôme**
**F-75000 Paris 1er (FR)**
**FR**

(72) Inventeur : **Galand, Claude**
**56 Avenue des Tuilières**
**F-06800 Cagnes/Mer (FR)**

(74) Mandataire : **Tubiana, Max**
**Compagnie IBM France Département de Propriété Industrielle**
**F-06610 La Gaude (FR)**

# 0 085 820

**Description**

## Domaine de l'Invention

La présente invention porte sur un procédé de transmissions numériques à plusieurs vitesses et son application à la concentration d'informations numériques provenant de plusieurs sources, sur un canal unique de transmission. Elle s'applique plus précisément à la transmission d'informations numériques d'origine vocale.

## Etat de la Technique

Les conditions de transmission numérique sur un canal donné peuvent varier dans le temps. Il est donc avantageux de pouvoir disposer d'émetteurs à plusieurs vitesses (nombre de bits par seconde) de transmission, équipés de moyens simples permettant de passer d'une vitesse à une autre en fonction des conditions de transmission du moment. De plus, le coût des lignes de transmission a amené les industriels à rechercher des méthodes permettant de transmettre sur une même voie, les informations provenant de plusieurs sources. Les techniques numériques se prêtent particulièrement bien à ce genre d'opérations. Pour ce faire, les signaux des différentes sources sont individuellement échantillonnés. Ces échantillons sont codés en numérique avant d'être alternativement et séquentiellement transmis sur la voie de transmission unique, par application des techniques dites de multiplexage dans le temps (TDM). Mais pour que le système puisse fonctionner correctement il est naturellement nécessaire qu'à l'autre extrémité de la voie de transmission, c'est-à-dire à la réception, chaque destinataire puisse retrouver le signal qui lui était destiné. En d'autres termes, on doit non seulement pouvoir, à la réception, redistribuer correctement les échantillons par démultiplexage ; mais encore faut-il que l'information contenue dans le flot d'échantillons reçus par un destinataire, soit suffisante pour permettre une reconstitution fidèle du signal transmis. Plus précisément, lorsque lesdites sources fournissent des signaux vocaux à transmettre vers des destinataires respectifs, ces derniers doivent recevoir des informations non seulement intelligibles mais de qualité suffisamment bonne pour ne pas être d'une écoute désagréable. On se trouve alors devant deux exigences contradictoires. En effet, d'une part, pour qu'un signal puisse être fidèlement reproduit, il faut que sa représentation numérique ait été aussi précise que possible, donc que la quantité des informations numériques qui le définissent soit relativement élevée. D'autre part, plus la quantité d'informations fournies par une même source, dans un intervalle de temps donné, est élevée, moins le nombre de sources desservies par une même voie de transmission pourra être important.

Les solutions apportées à ce genre de problème sont nombreuses. Leur multiplicité suffit déjà à démontrer l'intérêt pratique accordé par l'industrie à l'étude du problème et à la découverte de solutions efficaces. Mais on constate en outre une activité actuellement accrue dans le domaine technique considéré, ce qui prouve que l'on ne pense pas avoir atteint une limite dans les perfectionnements du système considéré.

Deux axes de recherches peuvent être définis, le premier porte sur le traitement du signal fourni par chacune des sources, le second s'intéresse à la gestion des sources.

S'agissant ici essentiellement de sources de signaux d'origine vocale, on tient compte pour le traitement du signal fourni par une source donnée, des propriétés de la voix pour définir des modes de codage/décodage qui, pour une quantité d'information numérique minimale, permettent d'altérer le moins possible les qualités du signal vocal. On a défini de nombreux modes de traitement du signal vocal dans un grand nombre de revues et publications. On pourra notamment se reporter à l'ouvrage de J. Flanagan intitulé : « Speech Analysis Synthesis and Perception » publié en 1965 aux Editions Springer-Verlag, pour se familiariser avec certaines méthodes de codage de la voix. Une autre source de documentation est constituée par la publication IEEE International Conference on Acoustics, Speech and Signal Processing. On y retrouvera des techniques dites de compression de la voix, techniques ayant pour but de coder fidèlement le signal vocal à l'aide d'un minimum d'informations numériques. Parmi ces techniques de codage, on citera notamment celle publiée par MM. D. Esteban et C. Galand dans IEEE ICASSP 1978 sous le titre : « 32 KBps CCITT Compatible Split Band Coding Scheme » traitant des techniques de codage en sous-bandes avec allocation dynamique de bits, techniques utilisées dans le préambule de la revendication principale du présent brevet.

Pour ce qui est, par ailleurs de la gestion d'un ensemble de sources en vue de leur concentration sur une même voie ou canal de transmission, on a déjà cité les techniques de multiplexage. Ces techniques procédant en gros par assignation séquentielle et cyclique du canal de transmission à chacune des sources. On en comprend aisément les limitations. La capacité de transmission du canal (nombre de bits par seconde) ne peut en principe être inférieure à la somme des bits fournis en une même seconde par les différentes sources. Toutefois, les sources de signaux vocaux présentent la particularité d'avoir des activités intermittentes. Plus précisément, pour une source qui à priori semble active du fait qu'elle est rattachée à un moment donné à une personne engagée dans une conversation, on détecte des alternances de zones de silence ou d'inactivité noyées dans des zones d'activité effective. On a développé des techniques exploitant la présence de ces zones d'inactivité pcur associer une même voie de transmission à un groupe de « L » sources, où L pourrait sembler, à priori, être un nombre excessif. On citera notamment les techniques dites TASI (Time Assignement Speech Interpolation). Un dispositif y est utilisé pour déceler en permanence les sources du groupe considéré, qui, à un instant donné, peuvent être considérées en activité effective (selon un critère prédéterminé), et n'allouer le canal de transmission qu'à ces sources. Le nombre L est défini à partir de règles statistiques avec tout ce que cela comporte de risques dans une application pratique. C'est ainsi que, dans des instants d'activité intense, le système de multiplexage de type TASI peut être amené à retarder la transmission de certaines sources, ou même carrément geler ces sources, autrement dit leur couper la parole. Toutes ces solutions sont naturellement inadmissibles dans un système conversationnel en temps réel.

Enfin, on peut penser à combiner les techniques dites de compression du signal vocal fourni par chacune des sources, à celles du multiplexage de l'ensemble des L sources. Mais il ne faut alors pas qu'aux inconvénients inhérents à chacune des techniques, notamment aux inconvénients cités plus haut, viennent s'ajouter ceux d'une complexité excessive, complexité rendant impossible toute exploitation industrielle du système.

On a en outre proposé des procédés de codage du signal à transmettre permettant des transmissions à plusieurs vitesses, notamment dans un article de David J. Goodman publié dans la revue IEEE Transactions on Communications, Vol. COM-28, No. 7, juillet 1980, pages 1040 et suivantes. Cet article intitulé : « Embedded DPCM for Variable Bit Rate Transmission » indique une méthode permettant par simple abandon de bits des échantillons codés, de passer à une transmission à vitesse réduite. Mais d'une part le nombre de vitesses de transmission possibles est relativement limité, car ces vitesses ne peuvent être que des multiples de la fréquence d'échantillonnage ; d'autre part il semble nécessaire de transmettre une information auxiliaire indiquant au récepteur la vitesse de transmission choisie. Enfin, il semble difficile avec un tel système de concentrer simplement sur une même voie de transmission, les signaux de plusieurs sources parmi lesquelles certaines seraient favorisées dynamiquement en fonction de leur activité instantanée.

## Exposé de l'Invention

La présente invention a pour objet un procédé simple et efficace de transmissions numériques multi-vitesses de signaux vocaux dans lequel le récepteur déduit de l'information vocale reçue, la vitesse de transmission utilisée.

La présente invention a aussi pour objet un procédé de concentration des signaux d'origine vocale fournis par un groupe de L sources, sur une même voie de transmission par utilisation de techniques de compression et de techniques de multiplexage se combinant entre elles de manière simple.

L'invention a encore pour objet des techniques de concentration permettant d'éviter tout retard ou même gel d'une source quelconque en période de congestion de trafic.

Plus précisément, la présente invention procède par traitement, en vue de compression, du signal de chaque source par application de techniques impliquant un découpage de la bande passante du signal vocal corespondant en un nombre donné de sous-bandes, et répartition dynamique des bits de codage entre les sous-bandes. Le signal issu d'une source donnée est ainsi codé à un taux correspondant à la vitesse de transmission maximum possible. Les bits de chaque macro-échantillon (on entend par là l'information regroupant les échantillons de l'ensemble des sous-bandes considérées à un même instant d'échantillonnage), sont répartis selon un format prédéterminé comportant différentes zones au sein desquelles les bits de codage des échantillons sont placés en tenant compte à la fois de leurs poids et de leur répartition entre les sous-bandes pour un codage à chacun des taux correspondant à chacune des vitesses de transmission possibles préalablement définies. On obtient ainsi, à chaque instant d'échantillonnage, un macro-échantillon dit multi-taux. Une fois la vitesse de transmission effective à un instant donné, choisie, le format du macro-échantillon multi-taux construit est éventuellement tronqué par abandon des bits d'une ou plusieurs zones, avant d'être transmis.

Le procédé ci-dessus s'adapte particulièrement bien à une concentration des signaux vocaux issus de plusieurs sources sur une même voie de transmission et ce en attribuant aux sources les plus actives, les taux de codage les plus élevés.

D'autres objets, caractéristiques et avantages de la présente invention ressortiront mieux de l'exposé qui suit, fait en référence aux dessins annexés à ce texte, qui représentent un mode de réalisation préféré de celle-ci.

## Brève Description des Figures

Figures 1 et 4 schémas de codeurs utilisés dans le cadre de l'invention.
Figures 2 et 3 et 3A formats d'arrangement de bits selon l'invention.
Figure 5 schéma de principe d'un concentrateur selon l'invention.
Figures 6 et 7 schémas plus détaillés de concentrateurs selon l'invention.

## Description Détaillée d'un Mode de Réalisation de l'invention

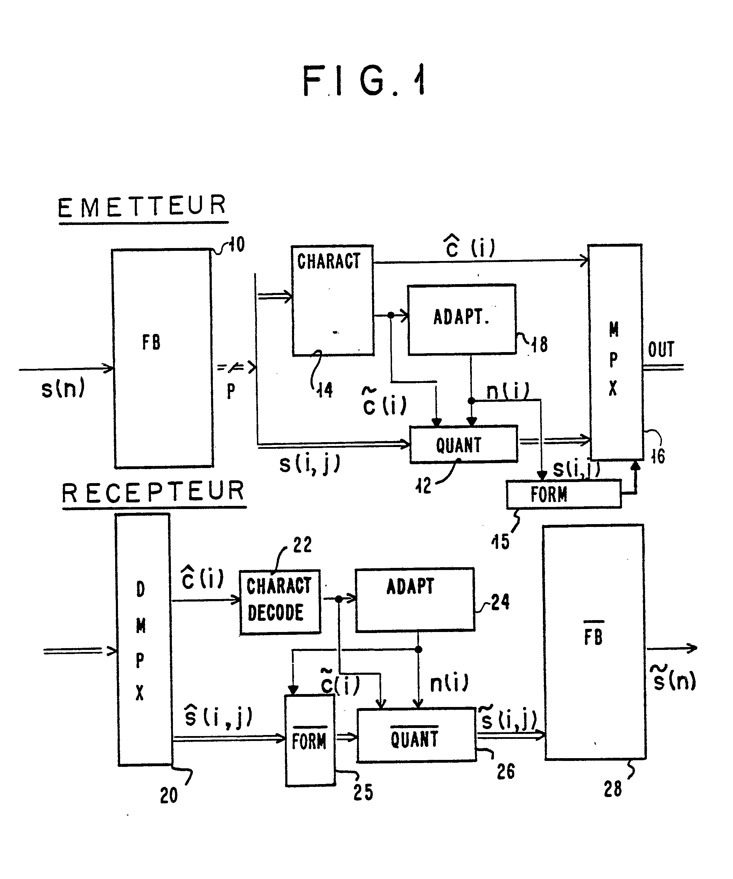

On a représenté sur la figure 1 un codeur/décodeur semblable (mis à part le circuit FORM qui sera décrit plus loin) à celui présenté à la Conférence IEEE de Camelot Inn, Tulsa, Oklahoma, 10-12 avril 1978, par D. Esteban et C. Galand, sous le titre « 32 Kbps CCITT Compatible Split Band Coding Scheme » et publié dans les IEEE ICASSP 1978. Un codeur du même type a aussi été décrit dans le brevet français No. 77 13995 publié sous le numéro 2 389 277. Le contenu de ces deux publications est à incorporer dans la présente description. Toutefois, les éléments nécessaires à la réalisation de l'invention seront repris ici. On notera cependant entre les dispositifs décrits dans les documents cités ci-dessus et la présente description quelques différences de notations qui, bien qu'évidentes, seront éventuellement précisées pour éviter toute ambiguïté.

On constatera ultérieurement que deux principes de base sont utiles à la présente invention. A savoir, d'une part, une partie au moins de la bande passante des signaux vocaux à transmettre est décomposée en p (= à 8 ou 16 par exemple) sous-bandes entre lesquelles les M (la notation N est utilisée dans l'article et le brevet cités) bits constituant les ressources de codage sont alloués dynamiquement. L'élément de référence régissant la répartition dynamique est l'énergie relative contenue dans la sous-bande considérée par rapport aux autres sous-bandes. D'autre part, le caractère dynamique peut avoir une base de temps relativement longue (8 à 32 ms par exemple). On code (ou recode) donc le signal vocal initial par tronçons successifs en utilisant les techniques dites BCPCM (Block Companded PCM) que l'on peut résumer comme suit. Pour chaque tronçon de signal on définit un facteur d'échelle ou terme caractéristique « C », fonction de la dynamique du tronçon et on code le signal vocal par rapport à C. Plus précisément, le signal vocal étant échantillonné à la fréquence de Nyquist, le terme caractéristique C est choisi tel que le plus grand échantillon du bloc ne tombe pas en dehors des limites du codage durant l'intervalle de temps considéré. L'ensemble constitué par C et les échantillons quantifiés fournit l'information numérique définissant complètement le tronçon du signal ayant fourni le bloc d'échantillons considéré. Pour plus de précisions sur les techniques BCPCM, on se reportera à l'article de A. Croisier relatif à une présentation faite au Séminaire International de Communications numériques de 1974 à Zurich, sous le titre « Progress in PCM and Delta Modulation : Block Companded Coding of Speech Signal ».

On comprend alors le fonctionnement des dispositifs de la figure 1. La partie supérieure représente un émetteur incorporant le codeur utilisant les principes définis ci-dessus. Le signal vocal couvrant une bande de fréquences donnée et échantillonné à la fréquence de Nyquist fournit des échantillons S(n). Ces échantillons auront éventuellement été au préalable codés à un taux de bits relativement élevé (12 bits par exemple).

Le signal représenté par les échantillons S(n) est envoyé sur un banc de filtre FB 10 d'où sont issus « p » sous-bandes désignées par $B_i$ où i = 1, 2, ..., p. On obtient donc en sortie du banc de filtres et pour chaque tronçon de signal vocal traité, N échantillons par sous-bande (dans les références citées chaque tronçon de signal comporte, avant filtrage en sous-bandes, K échantillons).

Soit S(i,j) le $j^{ième}$ échantillon de la $i^{ième}$ sous-bande. Donc i = 1, 2, ..., p et j = 1, 2, ..., N. Ces échantillons sont introduits dans un ensemble de quantification 12 traitant séparément chacune des sous-bandes. Plus précisément, le pas de quantification pour chaque sous-bande est défini pour N échantillons et en fonction de l'énergie relative contenue dans ladite sous-bande par rapport à celles contenues dans les autres sous-bandes durant le même intervalle de temps.

Pour chaque signal de sous-bande, un générateur de caractéristiques 14 détermine la caractéristique de sous-bande obéissant à la relation :

$$C(i) = \text{Max } (|S(i,j)|) \qquad (1)$$
$$j = 1, ..., N$$

Ce qui revient, pour chaque sous-bande, à trier les échantillons S(i,j) de chaque bloc, pour y détecter le plus grand en valeur absolue et attribuer sa valeur à C(i). On obtient ainsi p termes caractéristiques C(1), C(2), ..., C(p) qui sont requantifiés en 14. Le dispositif 14 opère une conversion de code à douze bits en quatre bits à l'aide d'une table à échelle logarithmique. On a désigné par C(i) les termes caractéristiques codés à quatre bits. Ces termes caractéristiques peuvent être envoyés vers un multiplexeur 16 disposant les bits des $\hat{C}_i$ et ceux des échantillons $\hat{S}(i,j)$, précisés plus loin, selon un format donné. Les termes C(i) sont aussi décodés dans le dispositif 14 pour être utilisés dans le requantificateur 12. Les termes caractéristiques décodés sont désignés par $\tilde{C}(i)$. Ces derniers termes caractéristiques sont utilisés dans le (re)quantificateur 12 pour les opérations d'allocation dynamique (ou adaptative) des bits de requantification des échantillons S(i,j). On montre que pour un taux de bits M exprimé par période d'échantillonnage de sous-bande, le rapport signal sur bruit de quantification global est minimisé si le nombre de bits n(i) affecté à la requantification de la $i^{ième}$ sous-bande, obéit à la relation :

$$n(i) = \frac{1}{p}\left[ M - \sum_{j=1}^{p} \log \tilde{C}(j) \right] + \log \tilde{C}(i) \qquad (2)$$

pour i = 1, 2, ..., p

et
$$\sum_{i=1}^{p} n(i) = M \tag{3}$$

où le terme « log » désigne le logarithme à base 2.

En fait, la relation (2) ne fournit pas nécessairement des valeurs entières. En pratique, les $n(i)$ seront arrondis à la valeur entière la plus proche, et limités à un nombre prédéterminé de valeurs tels que 0, 1, 2, 3, 4 ou 5 par exemple. Si la somme des $n(i)$ est différente de M, on pourra la ramener à M en utilisant des techniques simples du genre de celles décrites dans le brevet français cité plus haut.

Les opérations d'allocations dynamiques des bits de codage réalisant les fonctions des expressions (2) et (3) sont effectuées dans le dispositif ADAPT portant la référence 18. Le requantificateur 12 détermine tout d'abord les pas de quantification $Q(i)$ à utiliser, tels que :

$$Q(i) = \bar{C}(i)/2^{n(i)-1} \tag{4}$$

pour $i = 1, 2, ..., p$ et $n(i) \neq 0$.

Ensuite les requantifications d'échantillons $S(i,j)$ sont effectuées en 12 de manière telle que les échantillons requantifiés $\hat{S}(i,j)$ obéissent à la relation :

$$\hat{S}(i,j) = \|S(i,j)/Q(i)\| \tag{5}$$

pour $\begin{cases} i = 1, 2, ..., p \text{ et } n(i) \neq 0. \\ j = 1, 2, ..., N. \end{cases}$ \hfill (6)

et le symbole $\| \cdot \|$ indiquant que les valeurs obtenues sont tronquées aux valeurs entières les plus proches.

Les termes $\hat{S}(i,j)$ sont eux aussi transmis au multiplexeur 16. Mais ce multiplexeur a ceci de particulier, c'est qu'il est commandé par un dispositif de mise en format $\overline{FORM}$, qui a été rajouté au codeur de l'art antérieur et dont on verra le rôle plus loin.

Côté réception, voir partie inférieure de la figure 1, les termes $\hat{C}(i)$ et $\hat{S}(i,j)$ sont utilisés pour reconstituer le signal vocal d'origine. Pour ce faire, un démultiplexeur 20 sépare les caractéristiques $\hat{C}(i)$ des échantillons $\hat{S}(i,j)$. Les termes $\hat{C}(i)$ codés à quatre bits sont décodés en 22 par lecture d'une table de type logarithmique inverse. Les termes décodés $\bar{C}(i)$ sont utilisés dans un dispositif ADAPT 24 pour déterminer les taux de bits alloués $n(i)$ pour $i = 1, 2, ..., p$, par utilisation des expressions (2) et (3). Les $\bar{C}(i)$, $n(i)$ et $\hat{S}(i,j)$ servent à reconstituer les échantillons $\bar{S}(i,j)$ par des opérations de quantifications inverses opérées en 26. En fait, le dispositif de quantifications inverses 26 détermine tout d'abord p pas de quantifications $Q(i)$ obéissant à la relation (4), puis reconstruit les échantillons de sous-bandes de manière telle que, par exemple :

$$\bar{S}(i,j) = Q_i \cdot (\hat{S}(i,j) + 0,5) \quad \text{si } n(i) \neq 0 \tag{7}$$
$$\bar{S}(i,j) = 0 \quad \text{si } n(i) = 0 \tag{8}$$

pour $i = 2, 2, ..., p$ \hfill (9)
et $j = 1, 2, ..., N$.

Ces échantillons de sous-bandes ($\bar{S}(i,j)$) sont ensuite recombinés en un signal $\bar{S}(n)$ à l'aide d'un banc de filtres FB, 28, réalisant les opérations inverses de celles réalisées par le banc de filtres FB, 10.

On notera qu'au récepteur de l'art antérieur on a rajouté un dispositif $\overline{FORM}$ portant la référence 25 et dont on verra l'utilité plus loin.

Partant des principes de base définis ci-dessus, on va décrire un procédé et un dispositif permettant de préparer un codage du signal à taux multiples. Après avoir codé le signal et l'avoir (re)quantifié au taux de bits le plus élevé choisi, on disposera les bits selon un format dit multi-taux. Il suffira alors de tronquer tout simplement l'ensemble de bits obtenu, pour disposer d'un groupe de bits de format convenable. Qui plus est, on montrera que le décodeur qui aurait à reconstituer le signal vocal n'aura besoin d'aucune information spéciale lui indiquant le taux de bits retenu au codage parmi un ensemble de taux prédéterminés.

Enfin, on montrera comment appliquer le procédé qui précède à la réalisation d'une transmission à plusieurs vitesses, et/ou desservant plusieurs portes (ou sources).

Pour être plus précis, on a choisi de coder en $p = 8$ sous-bandes et sur des tronçons de signal de 16 ms comportant $N = 16$ échantillons par sous-bande à l'aide du codeur de la figure 1. Les taux de bits de codage possibles ont été fixés à 32, 24, 16 et 8 Kbps (kilobits par seconde). Le spectre du signal vocal à coder étant limité à une fréquence $\leq 4\,000$ Hz, la fréquence de Nyquist est donc de de 8 KHz. Autrement dit le signal entrant dans le codeur de la figure 1 est initialement échantillonné à 8 KHz. Comme on veut maintenir le taux de bits de codage global constant entre entrée et sortie du banc de filtres FB, une opération dite de décimation est réalisée au sein de FB. Cette opération ramène la fréquence d'échantillonnage à 1 KHz par sous-bande (puisque p = 8). A chaque instant d'échantillonnage ramené à 1 KHz on a en considérant l'ensemble des 8 sous-bandes 8 échantillons à (re)quantifier. Ce groupe de huit échantillons est appelé macro-échantillon. Autrement dit chaque tronçon de 16 ms de signal fournit, outre les termes caractéristiques, 16 macro-échantillons. En appliquant les techniques BCPCM on obtient 8 termes caractéristiques par tronçon de signal de 16 ms, lesquels une fois codés à 4 bits, comme indiqué plus haut, utilisent donc $(4 \times 8)/16 \times 10^{-3} = 2$ Kbps. Ce qui signifie qu'il ne reste plus que 30, 22, 14 ou 6 Kbps pour requantifier les échantillons proprement dits. Autrement dit, selon que le taux de bits de codage (ou vitesse de transmission V) sera 32, 24, 16 ou 8 Kbps, on aura M = 30, 22, 14 ou 6 bits à allouer dynamiquement à la (re)quantification de chaque macro-échantillon.

Si l'on reprend la formule (2), cela signifie que pour :

$$V = 32 \text{ Kbps} \quad n(i\,;32) = \frac{1}{8}\left[30 - \sum_{j=1}^{8} \log \tilde{C}(j)\right] + \log \tilde{C}(i) \tag{10}$$

$$V = 24 \text{ Kbps} \quad n(i\,;24) = \frac{1}{8}\left[22 - \sum_{j=1}^{8} \log \tilde{C}(j)\right] + \log \tilde{C}(i) \tag{11}$$

$$V = 16 \text{ Kbps} \quad n(i\,;16) = \frac{1}{8}\left[14 - \sum_{j=1}^{8} \log \tilde{C}(j)\right] + \log \tilde{C}(i) \tag{12}$$

$$V = 8 \text{ Kbps} \quad n(i\,;8) = \frac{1}{8}\left[6 - \sum_{j=1}^{8} \log \tilde{C}(j)\right] + \log \tilde{C}(i) \tag{13}$$

où i = 1, 2, ..., 8.

Les vitesses de transmission, taux de codage, nombres de sous-bandes, etc., ont été judicieusement choisis pour faciliter la mise en œuvre de l'invention, comme on le remarquera ultérieurement. On notera que le passage d'un taux à l'autre, dans l'exemple choisi, se traduit par une variation de 1, 2 ou 3 bits sur les n(i). En effet :

$$\left.\begin{aligned} n(i\,;32) &= n(i\,;24) + 1 \\ &= n(i\,;16) + 2 \\ &= n(i\,;8) \;\; + 3 \end{aligned}\right\} \tag{14}$$

Le codeur (voir figure 1) est réglé pour coder à 32 Kbps. Ceci signifie que toutes les 16 ms, 32 bits sont réservés au codage des termes caractéristiques C(i). Il reste donc 480 bits pour la quantification des 16 macro-échantillons contenant les S(i,j) proprement dits. Si l'on voulait coder à 8 Kbps, on ne disposerait que de 96 bits par bloc de macro-échantillon de 16 ms. Pour chaque taux de codage immédiatement supérieur à 8 Kbps, c'est-à-dire (16, 24 et 32) on dispose de 128 bits supplémentaires par bloc de macro-échantillons.

On va donc choisir un format dit de macro-échantillon comportant des « zones » de bits de longueurs prédéterminées. On répartira ensuite judicieusement les bits obtenus par codage de chaque macro-échantillon, entre lesdites zones. L'ensemble de bits ainsi formé constituera ce que l'on appellera un macro-échantillon multi-taux. Ensuite, selon la vitesse à laquelle on voudra transmettre, donc selon le taux de bits de codage retenu, il suffira de choisir la portion de macro-échantillon multi-taux nécessaire en tronquant éventuellement celui-ci.

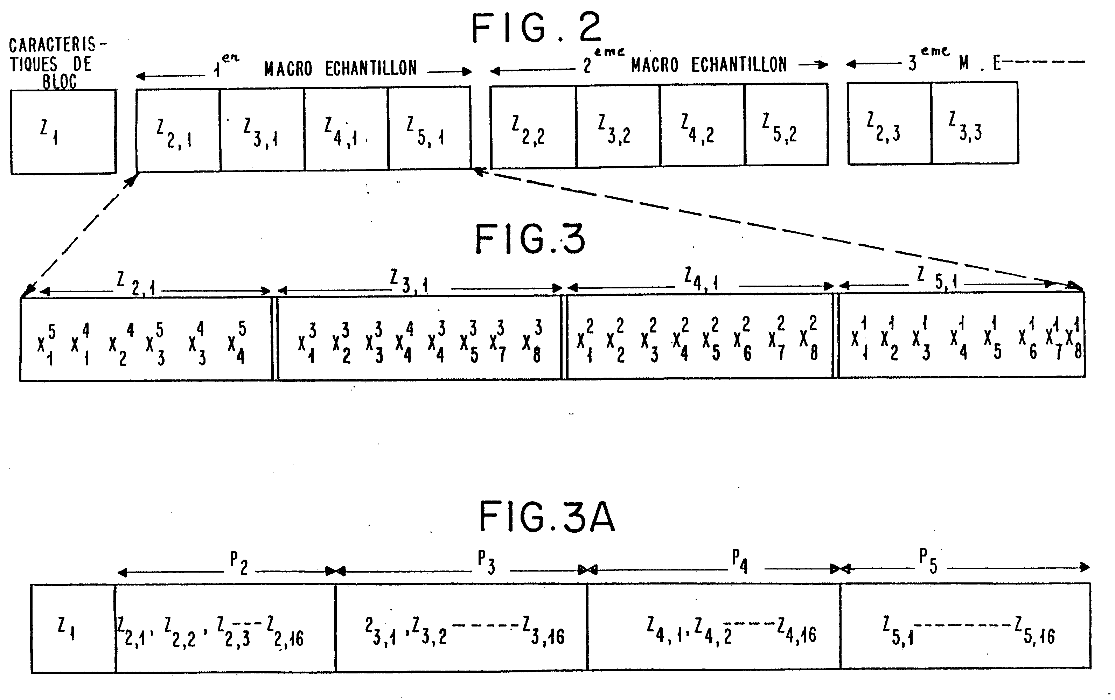

Pour chaque bloc de signal de 16 ms de durée, la répartition des bits obtenus par codage des termes caractéristiques et des échantillons proprement dits se fera selon le format de disposition de bits de la figure 2.

Pour chaque tronçon de 16 ms de signal vocal, 32 bits obtenus par codage des termes caractéristiques $\hat{C}(i)$ pour i = 1, 2, ..., 8, sont placés dans une zone (1) notée $Z_1$. Ensuite, les bits des termes $\hat{S}(i,j)$ de chaque macro-échantillon codé sont répartis entre quatre zones numérotées 2 à 5 et notés $Z_{u,j}$ où j = 1, 2, ..., 16 qui représente le rang du macro-échantillon dans le bloc d'échantillons considéré et u = 2, 3, 4, 5 représente le rang de la zone considérée, selon un format précisé plus loin. Pour l'instant, on notera que les bits des zones 2 à 5 constitueront un macro-échantillon multi-taux. Chaque bloc de 16 ms de signal fournira 16 de ces macro-échantillons. On verra plus loin que lorsque l'on voudra transmettre ou coder à 32 Kbps on conservera l'ensemble des zones (1) à (5). Par contre, pour un codage à 24 Kbps on tronquera chaque macro-échantillon multi-taux en supprimant tout simplement la zone (5). Pour 16 Kbps on supprimera les zones (4) et (5), et pour 8 Kbps on supprimera les zones (3) à (5).

Le nombre de zones d'un macro-échantillon multi-taux est naturellement lié au nombre de taux de codage choisis. En pratique, ces taux pourront être plus nombreux, que ceux qui ont été mentionnés plus haut. On les choisira par exemple dans l'ensemble 12, 14, 16, 18, 20, 22, 24, 26, 28, 30 et 32 Kbps. Le système d'adaptation de vitesse de transmission est donc extrêmement souple puisqu'il permet de choisir des taux qui ne sont pas nécessairement multiples de la fréquence d'échantillonnage du signal de parole.

Les huit termes caractéristiques qui sont les mêmes quel que soit le taux de codage donc la vitesse de transmission retenue, une fois codés à quatre bits sont regroupés dans la zone (1). Ces termes caractéristiques sont ensuite localement décodés dans le dispositif 14 et utilisés conformément à la formule (10) pour en déduire dans le dispositif ADAPT 18 les taux de bits $n(i ; 32)$ à allouer dynamiquement à la (re)quantification des macro-échantillons dans le dispositif QUANT 12. Les valeurs de $n(i ; 32)$ obtenues sont, en pratique, ajustées à la valeur entière la plus proche. Elles peuvent aussi être limitées à une gamme donnée, par exemple $0 \leqslant n(i ; 32) \leqslant 5$. Les valeurs qui en résultent sont ensuite ajustées de manière que leur somme soit égale à 30.

De plus, les termes $n(i ; 32)$ sont utilisés dans le dispositif de mise en format FORM 15 pour déterminer les termes $n(i ; 24)$, $n(i ; 16)$ et $n(i ; 8)$ selon la formule (14). En fait, il y aura parfois à procéder à des ajustements comme on le verra plus loin. Pour être plus explicite on va maintenant décrire un exemple de codage permettant de mieux saisir les règles de répartition, au sein des zones de macro-échantillon multi-taux, des bits obtenus par codage des échantillons $S(i,j)$. Supposons que pour le codage à 32 Kbps d'un tronçon de signal vocal donné on ait obtenu par allocation dynamique, les taux de bits suivants :

Tableau I

| Sous-bande i = | 1 | 2 | 3 | 4 | 5 | 6 | 7 | 8 | Total |
|---|---|---|---|---|---|---|---|---|---|
| $n(i ; 32)$ | 5 | 4 | 5 | 5 | 3 | 2 | 3 | 3 | 30 |

Les échantillons des sous-bandes codées peuvent donc s'écrire pour le $j^{ième}$ instant d'échantillonnage :

(Sachant qu'il s'agit ici du $j^{ième}$ échantillon, on a simplifié l'écriture en ne faisant pas figurer les termes j dans la notation des bits X).

$$\hat{S}_{1,j} = X_1^5 \quad X_1^4 \quad X_1^3 \quad X_1^2 \quad X_1^1$$
$$\hat{S}_{2,j} = X_2^4 \quad X_2^3 \quad X_2^2 \quad X_2^1$$
$$\hat{S}_{3,j} = X_3^5 \quad X_3^4 \quad X_3^3 \quad X_3^2 \quad X_3^1$$
$$\hat{S}_{4,j} = X_4^5 \quad X_4^4 \quad X_4^3 \quad X_4^2 \quad X_4^1$$
$$\hat{S}_{5,j} = X_5^3 \quad X_5^2 \quad X_5^1$$
$$\hat{S}_{6,j} = X_6^2 \quad X_6^1$$
$$\hat{S}_{7,j} = X_7^3 \quad X_7^2 \quad X_7^1$$
$$\hat{S}_{8,j} = X_8^3 \quad X_8^2 \quad X_8^1$$

où

$\hat{X}_i^s$ indique le bit de rang « s » de la $i^{ième}$ sous-bande,
$X_i^1$ représentant le bit de poids le plus faible.
L'ensemble :

$$\hat{S}_{1,j}, \ \hat{S}_{2,j}, \ \hat{S}_{3,j}, \ \hat{S}_{4,j}, \ \hat{S}_{5,j}, \ \hat{S}_{6,j}, \ \hat{S}_{7,j}, \ \hat{S}_{8,j}$$

constitue le $j^{ième}$ macro-échantillon.

En vertu de la relation (14) on aurait :

| Sous-bande i = | 1 | 2 | 3 | 4 | 5 | 6 | 7 | 8 | Total |
|---|---|---|---|---|---|---|---|---|---|
| $n(i ; 24)$ | 4 | 3 | 4 | 4 | 2 | 1 | 2 | 2 | 22 |
| $n(i ; 16)$ | 3 | 2 | 3 | 3 | 1 | 0 | 1 | 1 | 14 |

7

**0 085 820**

On constate que le nombre de bits alloués à la sixième sous-bande est égal à zéro pour une vitesse de 16 Kbps. Si l'on désire pouvoir opérer à une vitesse inférieure (par exemple 8 Kbps), il faut fixer certaines règles étant entendu que n(i) ne peut être négatif. Une solution consiste à ajuster les n(i) en plusieurs étapes :

La première étape consiste à retrancher un bit par sous-bande là où n(i) n'est pas nul.

Si le nombre total de bits est encore supérieur au nombre de bits disponibles pour la (re)quantification des sous-bandes (soit 6 bits pour un codage à 8 Kbps) on reprendra en une deuxième étape les opérations de la première étape en commençant par les sous-bandes couvrant les gammes de fréquences les plus élevées. Ceci se justifie par le fait que la contribution du bruit de quantification à la qualité de perception des signaux vocaux est moins importante pour les fréquences élevées que pour les fréquences basses.

Pour l'exemple ci-dessus, on obtient donc :

| Sous-bande i = | 1 | 2 | 3 | 4 | 5 | 6 | 7 | 8 | Total |
|---|---|---|---|---|---|---|---|---|---|
| 1ère Etape n(i;8) | 2 | 1 | 2 | 2 | 0 | 0 | 0 | 0 | 7 |
| 2ème Etape n(i;8) | 2 | 1 | 2 | 1 | 0 | 0 | 0 | 0 | 6 |

Une fois les allocations de bits de quantification dynamiquement établis en FORM, 15, la répartition entre les zones des bits obtenus par codage des macro-échantillons devient relativement simple. Si l'on désigne respectivement par $\Delta i(2)$, $\Delta i(3)$, $\Delta i(4)$ et $\Delta i(5)$ les bits des zones 2, 3, 4 et 5 d'un même macro-échantillon, on obtient :

$$\Delta i(2) = n(i ; 8)$$
$$\Delta i(3) = n(i ; 16) - n(i ; 8)$$
$$\Delta i(4) = n(i ; 24) - n(i ; 16)$$
$$\Delta i(5) = n(i ; 32) - n(i ; 24)$$

Dans ce cas, la répartition des bits de chaque macro-échantillon d'un bloc d'échantillons codé à 32 Kbps selon le tableau I, devra obéir au Tableau II.

Tableau II

| Sous-bande (p=1) | $\Delta i$ | |
|---|---|---|
| ZONE (2) | | |
| 1 | 2 | |
| 2 | 1 | |
| 3 | 2 | |
| 4 | 1 | } $\Delta i(2)$ |
| 5 | 0 | |
| 6 | 0 | |
| 7 | 0 | |
| 8 | 0 | |
| ZONE (3) | | |
| 1 | 1 | |
| 2 | 1 | |
| 3 | 1 | |
| 4 | 2 | } $\Delta i(3)$ |
| 5 | 1 | |
| 6 | 0 | |
| 7 | 1 | |
| 8 | 1 | |

8

Tableau II (Suite)

| Sous-bande (p=1) | $\Delta i$ | |
|---|---|---|
| ZONE (4) | | |
| 1 | 1 | |
| 2 | 1 | |
| 3 | 1 | |
| 4 | 1 | } $\Delta i(4)$ |
| 5 | 1 | |
| 6 | 1 | |
| 7 | 1 | |
| 8 | 1 | |
| ZONE (5) | | |
| 1 | 1 | |
| 2 | 1 | |
| 3 | 1 | |
| 4 | 1 | } $\Delta i(5)$ |
| 5 | 1 | |
| 6 | 1 | |
| 7 | 1 | |
| 8 | 1 | |

La mise en forme de chaque macro-échantillon est effectuée dans le multiplexeur MPX, 16 sous la commande du circuit FORM, 15. Ce circuit FORM, 15 partant des n(i ; 32) déduit les n(i ; 24), n(i ; 16) et n(i ; 8) selon les règles définies plus haut et calcule les $\Delta i$. Il ordonne ensuite la mise en place des bits de chaque macro-échantillon du tronçon de signal en cours de traitement. Dans la zone (2) sont placés les bits les plus significatifs des échantillons de sous-bandes définis en fonction de n(i ; 8). Pour l'exemple considéré, seront tout d'abord placés les 2 bits les plus significatifs de l'échantillon de la première sous-bande soit $X_1^5 X_1^4$, puis le bit le plus significatif de la deuxième sous-bande, c'est-à-dire $X_2^4$. Viennent ensuite $X_3^5 X_3^4$ et enfin $X_4^5$. Le dispositif FORM définit aussi les bits à placer dans la zone (3) en déterminant les bits à rajouter pour passer de n(i ; 8) à n(i ; 16) ; soit, d'après le Tableau II en fonction du $\Delta i$ correspondant. Dans la zone (3) seront placés $X_1^3$ suivi de $X_2^3$, $X_3^3$, $X_4^4$, $X_4^3$, $X_5^3$, $X_7^3$ et $X_8^3$. Dans la zone (4) : $X_1^2$, $X_2^2$, $X_3^2$, $X_4^2$, $X_5^2$, $X_6^2$, $X_7^2$ et $X_8^2$. Enfin dans la zone (5) : $X_1^1$, $X_2^1$, $X_3^1$, $X_4^1$, $X_5^1$, $X_6^1$, $X_7^1$ et $X_8^1$. Ceci correspond donc à une répartition des bits selon le Tableau III ci-dessous :

Tableau III

| $S_{i,j}$ | | Zone 2 | | Zone 3 | Zone 4 | Zone 5 |
|---|---|---|---|---|---|---|
| $S_{1,j}$ | $=$ | $x_1^5$ | $x_1^4$ | $x_1^3$ | $x_1^2$ | $x_1^1$ |
| $S_{2,j}$ | $=$ | $x_2^4$ | $x_2^3$ | $x_2^2$ | $x_2^1$ | |
| $S_{3,j}$ | $=$ | $x_3^5$ | $x_3^4$ | $x_3^3$ | $x_3^2$ | $x_3^1$ |
| $S_{4,j}$ | $=$ | $x_4^5$ | $x_4^4$ | $x_4^3$ | $x_4^2$ | $x_4^1$ |
| $S_{5,j}$ | $=$ | $x_5^3$ | $x_5^2$ | $x_5^1$ | | |
| $S_{6,j}$ | $=$ | | $x_6^2$ | $x_6^1$ | | |
| $S_{7,j}$ | $=$ | $x_7^3$ | $x_7^2$ | $x_7^1$ | | |
| $S_{8,j}$ | $=$ | $x_8^3$ | $x_8^2$ | $x_8^1$ | | |

On a représenté sur la figure 3 le schéma d'un macro-échantillon multi-taux conforme au Tableau III ci-dessus. Les bits sont donc placés dans des « zones » déterminées en fonction de leurs poids (ou positions dans l'échantillon Ŝ(i,j) auquel ils appartiennent) et de leurs contributions au codage à chacun des taux de codage possibles.

Le dispositif FORM, 15 commande aussi le MPX, 16 pour regrouper les zones semblables des macro-échantillons obtenus à partir d'un même bloc d'échantillons correspondant à 16 ms de signal selon le schéma de la figure 3A. Sur ce schéma on a désigné par $Z_{u,j}$ la zone d'ordre u (pour u = 2, 3, 4 ou 5) du $j^{ième}$ (pour j = 1, 2, ...., 16) macro-échantillon du bloc considéré.

Le procédé décrit ci-dessus se prête particulièrement bien à une transmission numérique à différentes vitesses prédéterminées. Ceci, grâce à la présence, dans le codeur, d'une décomposition en sous-bande fournissant des macro-échantillons dont les bits peuvent être ordonnés selon un format judicieux.

Il suffit pour cela que le dispositif FORM, 15 commande la mise en format définitif des macro-échantillons en les tronquant par abandon d'une ou plusieurs zones selon la vitesse de transmission retenue. Une fois les macro-échantillons multi-taux éventuellement tronqués, chaque tronçon de signal vocal de 16 ms fournit donc grâce à la combinaison des actions du dispositif de mise en format 15 et du multiplexeur 16 un bloc de bits à transmettre sur la voie de transmission reliée à la sortie du multiplexeur 16, bloc dont la première portion contient les Ĉ(i) et la seconde contient 16 macro-échantillons tronqués (si le taux de bits de codage retenu est inférieur au taux maximum possible, soit 32 Kbps). L'opération consistant à tronquer les macro-échantillons d'un même bloc se fera en pratique dans le dispositif MPX, 16, dans lequel le bloc de macro-échantillons (voir Fig. 3A) sera tronqué globalement de l'une ou plusieurs de ses portions P2 à P5.

Les règles de réception se déduisent aisément de celles décrites plus haut pour expliquer les principes de construction des macro-échantillons à transmettre. Au dispositif de réception de l'art antérieur on a rajouté un circuit $\overline{\text{FORM}}$, 25 (voir Fig. 1, partie inférieure). Ce dispositif, connaissant la vitesse de transmission effective choisie parmi un groupe de vitesses de transmission prédéterminées, reconstitue les informations n(i) obéissant aux relations (10) à (14) par exemple. Partant de là, le circuit $\overline{\text{FORM}}$, 25, reconstitue les informations du type figurant sur le Tableau III. Il peut alors poursuivre le démultiplexage des bits des macro-échantillons pour reconstituer les échantillons de sous-bandes à soumettre au quantificateur inverse $\overline{\text{QUANT}}$. En pratique, il n'est pas nécessaire de communiquer au récepteur l'information vitesse d'émission. Celle-ci pourra être déduite de la mesure de longueur des macro-échantillons reçus. Cette mesure sera faite, notamment par détection dans le flot de bits reçu, d'informations dites « drapeau » délimitant les blocs de bits formés des $\hat{C}_i$ suivis de seize macro-échantillons.

Pour être plus précis, supposons que la vitesse de transmission soit de 16 Kbps, chaque macro-échantillon multi-taux aura donc été amputé des zones (4) et (5). Si on reprend l'exemple ayant conduit au format de macro-échantillons multi-taux représenté sur la figure 3, on aura en fait transmis et donc reçu, des macro-échantillons tronqués se présentant sous la forme :

$$X^5_{1,j} X^4_{1,j} X^4_{2,j} X^5_{3,j} X^4_{3,j} X^5_{4,j} X^3_{1,j} X^3_{2,j} X^3_{3,j} X^4_{4,j} X^3_{4,j} X^3_{5,j} X^3_{7,j} X^3_{8,j}$$

pour j = 1, 2, ..., 16.

Le dispositif $\overline{FORM}$, 25 partant du Tableau II reconstitué orientera chacun des bits reçus vers la sous-bande et le rang de bit auquel il appartient. Ceci permet de reconstituer les échantillons :

$$\hat{S}_{1,j} = X_1^5 \ X_1^4 \ X_1^3$$
$$\hat{S}_{2,j} = X_2^4 \ X_2^3$$
$$\hat{S}_{3,j} = X_3^5 \ X_3^4 \ X_3^3$$
$$\hat{S}_{4,j} = X_4^5 \ X_4^4 \ X_4^3$$
$$\hat{S}_{5,j} = X_5^3$$
$$\hat{S}_{6,j} = 0$$
$$\hat{S}_{7,8} = X_7^3$$
$$\hat{S}_{8,j} = X_8^3$$

Les termes ci-dessus sont ensuite étendus pour un codage à 32 Kbps par adjonction de bits nuls mais en tenant compte des règles d'allocation dynamique des bits de codage, entre les sous-bandes pour 32 Kbps. Le terme n(i ; 32) aura été déterminé par le dispositif ADAPT 24. Il en résulte que les échantillons soumis à la requantification inverse en $\overline{QUANT}$, 26, seront pour l'exemple cité :

$$\bar{S}_{1,j} = X_1^5 \ X_1^4 \ X_1^3 \ 0 \ 0$$
$$\bar{S}_{2,j} = X_2^4 \ X_2^3 \ 0 \ 0$$
$$\bar{S}_{3,j} = X_3^5 \ X_3^4 \ X_3^2 \ 0 \ 0$$
$$\bar{S}_{4,j} = X_4^5 \ X_4^4 \ X_4^3 \ 0 \ 0$$
$$\bar{S}_{5,j} = X_5^3 \ 0 \ 0$$
$$\bar{S}_{6,j} = 0 \ 0$$
$$\bar{S}_{7,j} = X_7^3 \ 0 \ 0$$
$$\bar{S}_{8,j} = X_8^3 \ 0 \ 0$$

Naturellement le procédé de l'invention peut être appliqué à un codeur en sous-bandes autre que celui représenté sur la figure 1.

Il existe en effet d'autres types de codeurs utilisant, au moins dans une certaine mesure, le codage en sous-bandes. C'est notamment le cas du codeur de type dit prédictif décrit dans les IEEE Proceedings of the International Conference on Acoustics Speech and Signal Processing, Tulsa, Oklahoma, 12 avril 1978, pages 307 à 311. La partie de ce codeur traitant des opérations de (re)quantification utilise les techniques décrites dans le brevet européen No. 0 002 998 délivré à la demanderesse sous le titre : « Procédé de compression de données relatives au signal vocal et dispositif mettant en œuvre ledit procédé ». On se reportera au rapport des IEEE et au brevet européen 0 002 998 pour plus de précisions et l'on incorporera ces textes à la présente invention.

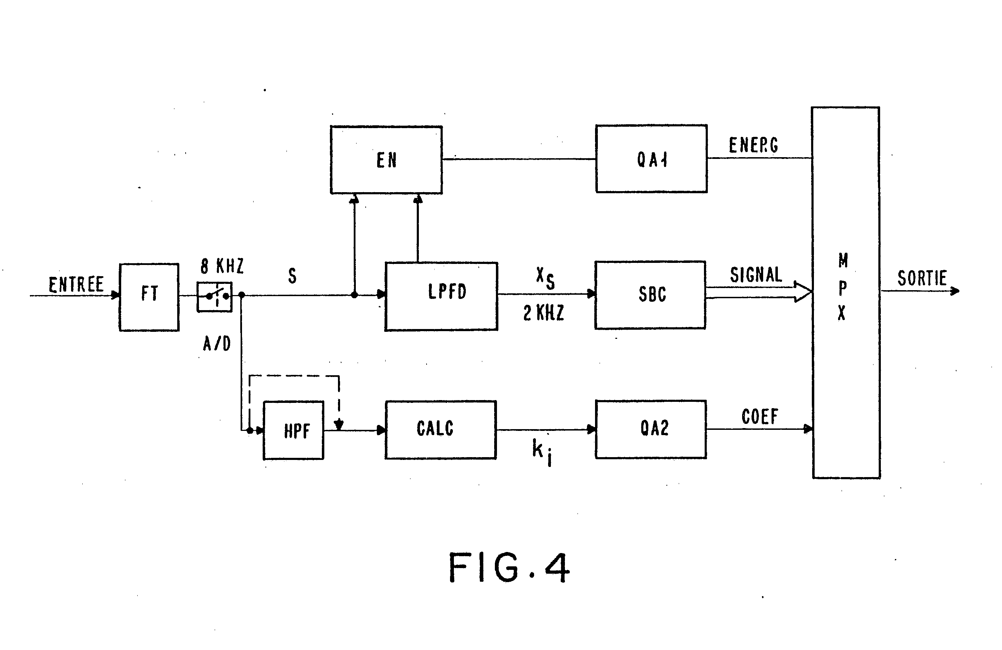

On rappellera que, selon le procédé décrit dans ce brevet 0 002 998 et mis en œuvre à l'aide du dispositif représenté sur la figure 4 ci-jointe, le spectre du signal vocal est limité à la bande téléphonique (≤ 4 000 Hz) en FT. Le signal fourni par le filtre FT est ensuite échantillonné à 8 KHz et codé en numérique à 12 bits dans un convertisseur A/D. Le signal issu du convertisseur A/D sert à engendrer trois types d'informations. La première, désignée par COEF représente des coefficients $k_i$ dits d'auto-corrélation partielle déterminés en CALC et quantifiés en QA2. La seconde est une information d'énergie, dite ENERG obtenue par filtrage en EN et quantification en QA1. Enfin, la troisième est une information désignée par SIGNAL. Cette dernière information est obtenue par codage en sous-bande (en SBC) de la bande basses fréquences, dite bande de base du signal vocal, obtenue par filtrage en LPFD du signal issu du convertisseur A/D. On notera ici que dans la mesure où le signal de bande de base est limité à une bande de fréquences allant de 300 à 1 000 Hz au maximum, ce signal diffère alors peu du signal dit résiduel ou d'excitation du codeur prédictif décrit à Tulsa. Le signal de bande de base issu du filtre LPFD est en fait requantifié en SBC par allocation dynamique du taux de bits disponible entre plusieurs sous-bandes. Cette requantification utilise les principes indiqués plus haut à propos du dispositif de la figure 1. On peut donc appliquer au codage en sous-bandes réalisé par le dispositif SBC, le procédé de transmission à plusieurs vitesses de la présente invention. Il suffirait de rajouter au dispositif de la figure 4 un circuit semblable au circuit FORM et opérant sur la portion d'information désignée par SIGNAL. Il faudra seulement prévoir dans la zone (1) du format de disposition de bits, un emplacement pour les termes ENERG et COEF en plus de celui réservé aux termes caractéristiques résultant du codage de la partie SIGNAL.

Comme déjà mentionné, le procédé de codage en sous-bandes se prête particulièrement bien à la concentration des signaux vocaux de plusieurs sources sur une même voie de transmission.

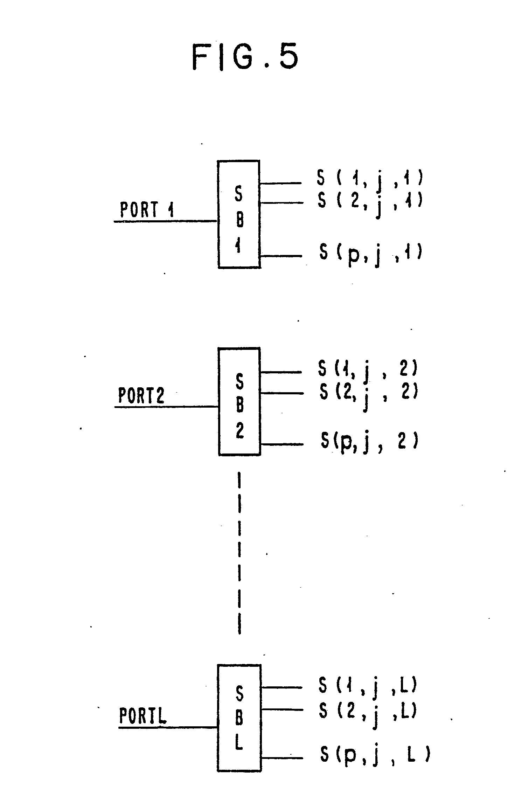

On a représenté sur la figure 5, le schéma de principe d'un dispositif destiné à desservir « L » sources respectivement connectées à des portes désignées par PORT1 à PORTL.

Si on désigne par SB1, SB2, ..., SBL les bancs de filtres appartenant à des codeurs en sous-bandes traitant respectivement les signaux des portes 1 à L on obtient une distribution d'échantillons de sous-bandes telle que représentée sur la figure 5.

Un codage par allocation dynamique optimale des bits de quantification des signaux des différentes portes peut être réalisé de manière globale sur l'ensemble des p.L signaux de sous-bandes. Pour ce faire, on pourra réaliser les opérations suivantes :

Détermination des caractéristiques

$$C(i,k) = \max_{j = 1,N} (|S(i,j,k)|)$$

pour $i = 1, ..., p$
$k = 1, ..., L$.

Codage des caractéristiques ;

Contrôle d'activité des portes et allocation dynamique des bits de (re)quantification des signaux de sous-bandes :

$$n(i, k) = \frac{1}{p \cdot L}\left[M \cdot L - \sum_{j=1}^{p} \sum_{k=1}^{L} \log \tilde{C}(j, k)\right] + \log \tilde{C}(i, k) \qquad (15)$$

pour $i = 1, ..., p$ $\qquad (16)$
$k = 1, ..., L$

avec en plus la contrainte :

$$\sum_{k=1}^{L} \sum_{i=1}^{p} n(i, k) = M \cdot L. \qquad (17)$$

Ajustage des n(i,k) en les tronquant à la valeur entière la plus proche. Ces valeurs entières seront limitées à un nombre prédéterminé de valeurs telles que 0, 1, 2, 3, 4, 5 par exemple. Puis on ajustera les valeurs de n(i,k) de manière telle que les expressions (15) à (17) soient vérifiées ; et

(Re)quantification des échantillons de chaque sous-bande.

Le procédé que l'on vient de décrire ci-dessus présente l'avantage de fournir un moyen de codage par allocation dynamique s'étendant de manière optimale à l'ensemble des p.L sous-bandes. Il peut cependant présenter quelques inconvénients lorsqu'on désire l'appliquer à un système de type TASI. Ainsi, le contrôle d'activité des portes étant distribué sur l'ensemble des sous-bandes, il serait utile d'introduire une interaction entre les portes et un contrôleur central. Chaque porte k fournirait au contrôleur les caractéristiques C(i,k), i = 1, ..., p, où les allocations de bits seraient calculées à l'aide des expressions (15) à (17) et renvoyées à chaque porte pour y effectuer les quantifications.

On va décrire ici un procédé de concentration des signaux de L portes, sur une même voie de transmission, particulièrement intéressant et basé sur l'application des principes du codage multi-taux décrit plus haut. Ce procédé comporte trois étapes essentielles. Une première étape dite de codage au cours de laquelle le signal de chaque porte est codé à un taux de bits prédéterminé et choisi pour être le taux de bits le plus élevé parmi ceux que l'on désire utiliser (par exemple 32 Kbps). Les bits obtenus par codage sont en outre répartis pour chaque porte considérée séparément selon le format dit de macro-échantillon multi-taux décrit plus haut. Une seconde étape dite de détermination d'activité des portes au cours de laquelle l'activité relative de chaque porte est déterminée. Cette activité relative sert à déterminer le taux de bit de codage à affecter à chaque source. Enfin, une troisième étape consiste à tronquer éventuellement les macro-échantillons multi-taux de chaque source en fonction du taux de bits de codage qui lui aura été affecté.

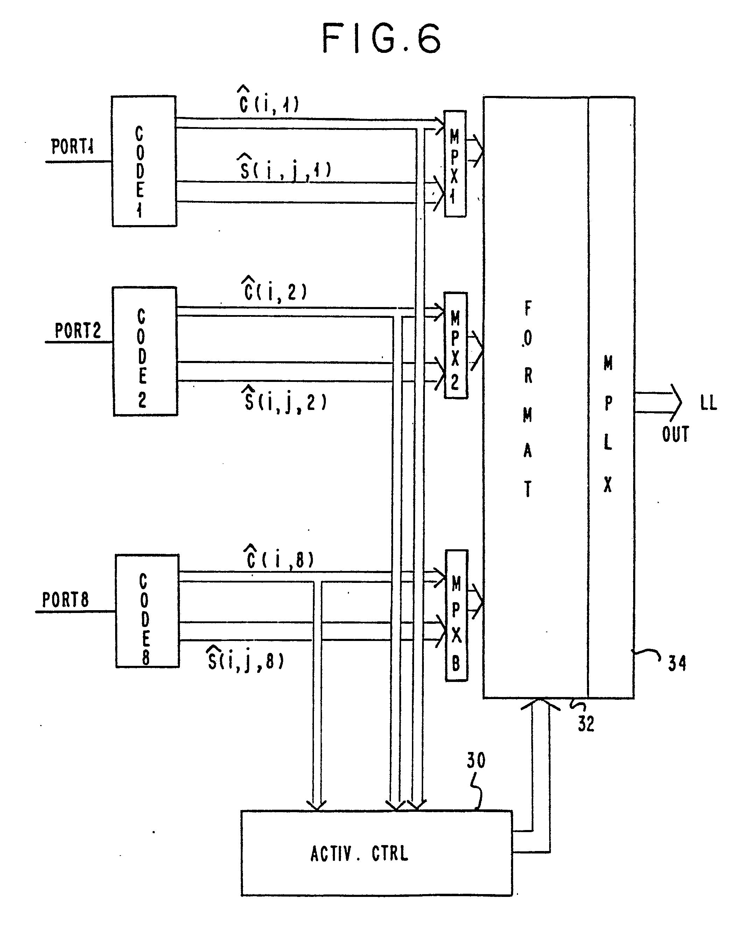

La figure 6 représente le schéma de principe d'un dispositif de concentration des signaux de L sources sur une voie unique LL. A titre d'exemple on a choisi L = 8. Le signal de chaque source, passant par une porte (PORT1 à PORT8) est codé en p = 8 sous-bandes en utilisant un codeur CODE(k), où k = 1, 2, ..., 8 indique le rang du codeur.

Chaque codeur fournit des termes caractéristiques $\hat{C}(i,k)$ et des échantillons requantifiés $\hat{S}(i,j,k)$. Le codage de chaque signal vocal se fait au taux le plus élevé choisi, soit 32 Kbps en utilisant les techniques BCPCM et les allocations dynamiques de taux de codage pour chaque porte considérée séparément. Ensuite les macro-échantillons multi-taux sont construits et ordonnés par blocs selon le format de la figure 3A. On a désigné par MPX(k) le dispositif de mise en format des macro-échantillons multi-taux associé à la $k^{ième}$ porte. On peut considérer que le dispositif MPX(k) groupe, en fait les dispositifs (15) et (16) de la figure 1, à ceci près que les macro-échantillons (ou blocs de macro-échantillons) sortant de chaque dispositif MPX(k) ne sont pas tronqués. Ils sont donc au taux maximum. Ils seront éventuellement tronqués dans un dispositif FORMAT, 32, une fois que le dispositif 30 aura mesuré l'activité relative de chaque porte par rapport aux autres portes et en aura déduit la vitesse de transmission à allouer durant 16 ms à la porte considérée.

Les opérations de détermination d'activité relative de porte et de définition de la vitesse de transmission à allouer à chaque porte sont basées sur l'application des formules (15) à (17). Mais l'application directe de ces formules aboutit à un problème de réajustement. Tout d'abord il faut calculer un taux de bits de porte :

$$N(k) = \sum_{i=1}^{p} n(i, k) \qquad (18)$$

qui doit être ajusté pour être égal à l'une des vitesses de transmission possibles (c'est-à-dire 8, 16, 24 ou 32 Kbps pour l'exemple choisi).

Ensuite, il faut que :

$$\sum_{k=1}^{L} N(k) = M \cdot L = Nc \qquad (19)$$

où Nc est égal à la portion de capacité du canal LL disponible pour la transmission des macro-échantillons des portes.

Or l'application des formules (18) et (19) nécessite des réajustements et toute action sur l'une a des répercussions sur l'autre, ce qui complique le procédé. Pour éviter cet inconvénient, on a choisi de scinder le problème en deux.

En effet, de la formule (15) on peut déduire :

$$\sum_{i=1}^{p} n(i, k) = \sum_{i=1}^{p} \left[ \frac{1}{pL} \left[ ML - \sum_{j=1}^{p} \sum_{\ell=1}^{L} \log \tilde{C}(j, \ell) \right] + \log \tilde{C}(i, k) \right] \qquad (20)$$

d'où

$$N(k) = \frac{1}{L} \left[ ML - \sum_{\ell=1}^{L} \sum_{j=1}^{p} \log \tilde{C}(j, \ell) \right] + \sum_{i=1}^{p} \log \tilde{C}(i, k) \qquad (21)$$

Si l'on pose :

$$W(\ell) = \sum_{j=1}^{p} \log \tilde{C}(j, \ell) \qquad (22)$$

où W(k) indique l'activité de la porte PORTk.

On obtient alors :

$$N(k) = \frac{1}{L} \left[ ML - \sum_{\ell=1}^{L} W(\ell) \right] + W(k) \qquad (23)$$

où $\ell$ est un indice de calcul que l'on fait varier de $\ell = 1$ à $\ell = L$ pour balayer l'ensemble des portes PORT1 à PORTL.

La formule (23) traduit une répartition dynamique optimale des ML bits destinés au codage des signaux entre les L portes en fonction de leurs activités W(k). Cette formule est à rapprocher de la formule (2).

On notera en outre ici qu'au lieu de déterminer l'activité W(k) de la porte d'ordre k à partir de la formule (22) on pourrait trier les éléments d'information sensiblement proportionnels à l'énergie de chaque sous-bande, à savoir les termes $\tilde{C}(i,k)$, lorsque les codeurs utilisés sont du type représenté sur la figure 1. (On verra plus loin que l'opération de mesure d'activité de porte peut être légèrement plus complexe pour un système utilisant le codeur de la figure 4).

$$W'(k) = \log \; \underset{i \, = \, 1,2, \, ..., \, p}{Max} \; \left[ \tilde{C}(i, k) \right] \qquad (22')$$

13

La formule (24) serait alors :

$$N(k) = \frac{1}{L}\left[ ML - \sum_{l'=1}^{L} W'(l') \right] + W'(k) \qquad (23')$$

Que l'on utilise les expressions (22) et (23) ou (22') et (23') la quantité d'opérations à réaliser pour mesurer les activités des portes PORT1 à PORTL et en déduire la vitesse de transmission à allouer à chaque porte est à peu près équivalente. On a choisi à titre d'exemple d'utiliser les expressions (22') et (23').

Les termes $\hat{C}(i,k)$ codés à 4 bits sont décodés dans le dispositif de mesure d'activité (30) avant d'y être soumis au tri. On pourra naturellement utiliser directement les termes $\bar{C}(i,k)$ déjà disponibles.

Le dispositif 30, comparant les activités des portes détermine leurs coefficients d'activité relative $N(k)$ obéissant à la relation (23').

Nc peut correspondre à une fraction seulement de la capacité de transmission de la voie LL lorsque celle-ci ne sert que partiellement à une transmission de type TASI opérée sur des signaux d'origine vocale.

De plus, pour les raisons évoquées plus haut, les termes $N(k)$ pour $k = 1, ..., L$ seront tronqués à la valeur entière la plus proche parmi les taux de bits permis (c'est-à-dire 8, 16, 24 ou 32 Kbps pour l'exemple décrit ici). Ensuite, les taux de bits de portes tronqués ainsi obtenus sont ajustés (ici par incréments de 8 Kbps) de manière à maintenir leur somme constante et égale à Nc. Ces ajustages pourront être effectués simplement en ajoutant ou retranchant 8 Kbps aux taux de codages des portes considérées selon un ordre de priorités pré-établies et connu du dispositif de réception qui, à l'autre extrémité de la voie LL doit reconstituer les signaux vocaux. la contrainte est donc que $N(k)$ ne peut être égal qu'à 8, 16, 24 ou 32 Kbps dans le cas où seuls ces taux auront été choisis. En réalité, on a vu que l'on pouvait affiner le système en augmentant le nombre de taux possibles, et ce sans rien changer aux principes de l'invention.

Le dispositif de mise en format 32 est contrôlé par le contrôleur d'activité 30. Ceci permet de donner aux macro-échantillons de chaque porte, un format correspondant au taux de bits alloué à ladite porte, en tronquant éventuellement les macro-échantillons multi-taux fournis par les circuits MPX(k). Ces opérations dépendront de la valeur de $N(k)$ allouée à la porte considérée, selon la formule (23') en fonction de son activité par rapport aux autres portes, donc de son activité relative, pour l'intervalle de temps de durée prédéterminée (exemple 16 ms) considéré.

Donc selon la valeur de $N(k)$, le contrôleur d'activité 30 commandera éventuellement l'amputation des 16 macro-échantillons d'un même bloc par simple suppression de zones de bits. Cette opération s'appliquera en considérant chaque porte séparément. Les opérations consistant à tronquer les macro-échantillons peuvent être simplifiées lorsque les circuits MPX(1) à MPX(8) mettent chaque bloc de macro-échantillons multi-taux dans le format de la figure 3A. Le multiplexeur MPX 34 transmet toutes les 16 ms sur la voie LL les huit caractéristiques et blocs de macro-échantillons des portes en utilisant les techniques de multiplexage dans le temps de type conventionnel.

Un groupe de L bits pourra notamment être réservé à l'identification des portes qui ne sont pas actives.

Il n'est en principe pas nécessaire de transmettre les taux de codage des portes puisque ceux-ci peuvent, à la réception être déduits des termes caractéristiques $C(i,j)$ pour chaque porte, en utilisant les formules (22') et (23').

Lorsque le canal LL est bruyant, on ajoutera en outre aux macro-échantillons, des bits de parité ou de contrôle. On pourra notamment prévoir à cet effet un canal (ou porte) dit(e) de contrôle, de faible capacité.

Dans les systèmes TASI de type conventionnel, certaines portes peuvent, en raison de la densité du trafic des autres portes, être complètement « gelées ». Ceci revient à couper la parole à certains utilisateurs du système, ce qui peut être particulièrement gênant. Le système de l'invention permet d'éviter ces inconvénients en fixant le nombre L de portes desservies de manière telle que :

$$Nc = (8.L) \text{ Kbps} \qquad (24)$$

Compte tenu du fait qu'en pratique les conditions de trafic très intense ne se produisent que sur 5 % du temps, la dégradation intermittente de qualité due à un fonctionnement à 8 Kbps peut être préférable au « gel » de porte(s). On peut en outre favoriser certaines portes par rapport à d'autres.

Si l'on veut favoriser la porte de rang $k_o$ on pourra fixer une limite inférieure à $N(k_o)$, par exemple $N(k_o) = 24$ Kbps. Dans ces conditions, l'allocation dynamique des taux de codage aux (L-1) portes autres que celle de rang $k_o$ se fera sur (Nc-24) au lieu de Nc pour $k = 1, 2, ..., L$ avec $k \neq k_o$.

Enfin, bien que l'on ait décrit le procédé ci-dessus tel qu'il serait appliqué dans un système utilisant des codeurs du genre représenté sur la figure 1, il est à noter que ce même procédé s'applique naturellement à d'autres codeurs en sous-bandes, et notamment à celui de la figure 4.

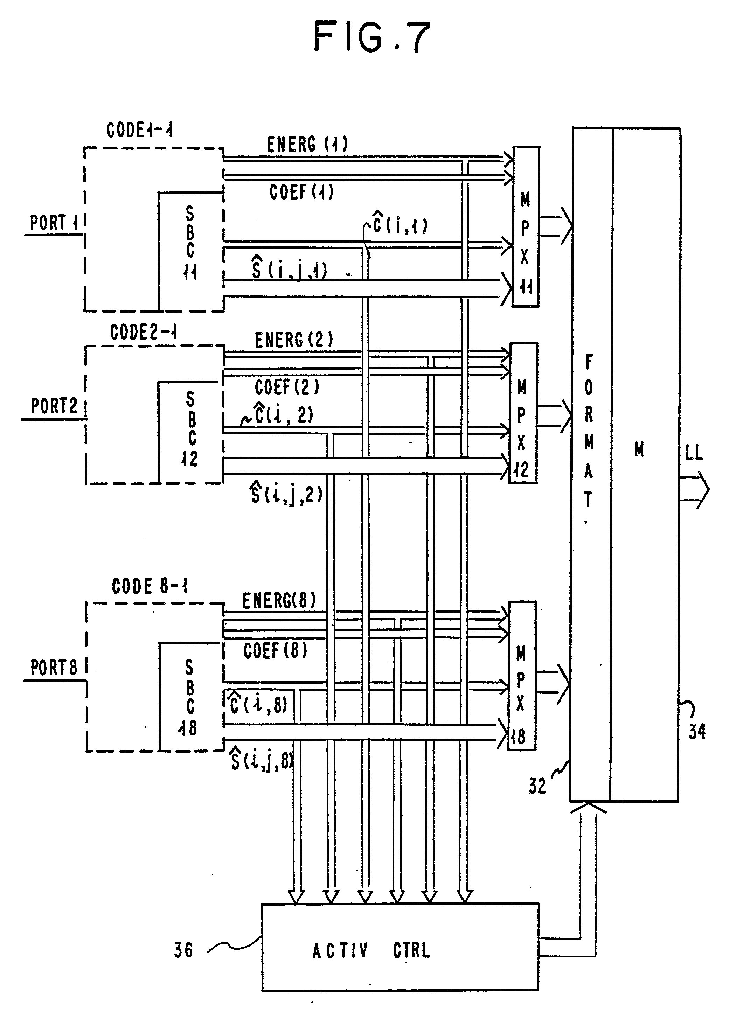

On a représenté sur la figure 7 un dispositif de transmission semblable à celui de la figure 6 mais utilisant le codeur de la figure 4 ou un codeur semblable mais de type prédictif dans lequel le signal traité en SBC serait vraiment un signal dit résiduel. Chacune de L = 8 portes aboutit sur un codeur désigné par CODE 1-1 à CODE 8-1. Chacun de ces codeurs délivre une information ENERG(k) et COEF(k), k désignant le rang du codeur. Ces informations ENERG et COEF sont envoyées sur des dispositifs de mise en format MPX 11 à MPX 18. D'autre part, les dispositifs SBC11 à SBC18 de codage en sous-bande appartenant aux codeurs CODE1-1 à CODE1-8 respectivement, fournissent les termes $\check{C}(i,k)$ et $\hat{S}(i,j,k)$ semblables à ceux fournis par les codeurs du dispositif de la figure 6 et qui seront donc traités de manière semblable. A ceci près, que les informations W'(1) à W'(8) traduisant les activités relatives des portes PORT1 à PORT8 seront établies de manière légèrement différente pour tenir compte des informations d'énergies en bande haute fréquence du signal vocal. Pour ce faire, au lieu de trier uniquement les $\check{C}(i,k)$ selon la formule (22'), le dispositif de mesure d'activité de portes ACTIV CTRL 36 opère un tri sur les $[\check{C}(i,k)]^2$ et sur les ENRG(k).

L'opération de mesure d'activité de chaque porte obéit donc à la relation :

$$W(k) = Max \: [[\check{C}(i,k)]^2, \quad \lambda.ENERG(k)] \qquad (25)$$
$$i = 1, ..., p$$

Expressions dans laquelle $\lambda$ est un coefficient numérique déterminé empiriquement et destiné à tenir compte des différences statistiques de répartition d'énergie entre bande haute fréquence et bande basse fréquence du spectre du signal vocal.

Le dispositif de mise en format 32 (tronquant éventuellement les macro-échantillons multi-taux) et le dispositif de multiplexage 34 sont semblables à leurs homologues du schéma de la figure 6. Il y aura cependant une différence fondamentale entre les formats de macro-échantillons obtenus à l'aide du dispositif de la figure 6 et ceux mettant en œuvre le dispositif de la figure 7. En effet, dans le second cas, il faudra réserver une zone (1) plus importante puisqu'elle devra contenir outre les $\check{C}(i,k)$, les ENERG(k) et COEF(k). Le nombre de bits à attribuer aux macro-échantillons proprement dits est donc diminué d'autant.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention. Par exemple dans un mode de réalisation de l'invention semblable à celui de la figure 7, on peut imaginer que les informations ENERG et COEF de chaque porte ne participent pas à l'élaboration de groupes de bits selon le format conduisant aux macro-échantillons multi-taux mais qu'ils soient directement transmis au multiplexeur 34.

**Revendications**

1. Procédé de codage dit multi-taux d'un signal électrique selon une méthode permettant par simple abandon de bits de passer d'un taux à un autre, ledit signal étant échantillonné à une fréquence prédéterminée et codé en sous-bandes selon les techniques dites d'allocation dynamique des bits de codage entre les sous-bandes, le taux de bits dudit codage pour l'ensemble des sous-bandes étant choisi en fonction du taux de bits le plus élevé parmi un ensemble de taux prédéterminés, ledit procédé étant caractérisé en ce qu'il comprend les opérations suivantes :

— constitution d'un format dit de macro-échantillon destiné à regrouper les bits obtenus par codage de l'ensemble des échantillons des diverses sous-bandes considérées à un même instant d'échantillonnage, ledit format étant scindé en un nombre de zones prédéterminées en fonction dudit ensemble de taux de bits de codage ;

— construction pour chaque instant d'échantillonnage, d'un macro-échantillon dit multi-taux par répartition des bits obtenus par codage de chaque échantillon dudit macro-échantillon entre lesdites zones en tenant compte du poids desdits bits et de leurs répartitions entre les sous-bandes, pour un codage à chacun des taux dudit ensemble de taux ;

le macro-échantillon étant ensuite éventuellement tronqué de certaines zones prédéterminées en fonction du taux de bits choisi dans ledit ensemble de taux prédéterminés.

2. Procédé de codage multi-taux selon la revendication 1, dans lequel le codage du signal utilise en outre les techniques dites BCPCM selon lesquelles le signal à coder est considéré par blocs d'échantillons successifs représentant un tronçon de signal prédéterminé, chaque tronçon fournissant un terme dit caractéristique fonction de la dynamique du tronçon et par rapport auquel les échantillons dudit tronçon sont codés, ledit procédé étant caractérisé en ce que :

— un nombre de bits prédéterminé est réservé au codage des termes caractéristiques de chaque bloc prédéterminés étant réduits d'autant ;

— les bits résultant du codage des termes caractéristiques de chaque bloc sont regroupés au sein d'une même zone de macro-échantillon dite zone caractéristique de bloc.

3. Procédé de codage multi-taux selon la revendication 2 caractérisé en ce que chaque bloc d'échantillons codé est organisé de manière à comporter la zone caractéristique de bloc suivie des macro-échantillons du même bloc.

4. Procédé de codage selon la revendication 2 caractérisé en outre en ce que chaque bloc d'échantillons est construit selon un format regroupant les bits des zones semblables de tous les macro-échantillons d'un même bloc d'échantillons.

5. Procédé de codage numérique selon l'une des revendications 2 à 4, caractérisé en ce que ledit codage de type BCPCM en sous-bandes est effectué sur l'ensemble du spectre en fréquences d'un signal vocal à transmettre.

6. Procédé de codage selon l'une des revendications 2 à 4, caractérisé en ce que ledit codage en sous-bande est effectué sur une fraction du spectre en fréquence d'un signal vocal fraction définie dans le cadre d'un codage de type prédictif du signal vocal d'origine.

7. Procédé de codage selon la revendication 6 caractérisé en ce que ladite fraction du spectre correspond à la bande dite de base du signal vocal.

8. Dispositif de codage destiné à la mise en œuvre du procédé selon l'une des revendications 2 à 7 et dans lequel les bits résultant du codage BCPCM en sous-bandes sont soumis à des moyens de construction des macro-échantillons multi-taux comprenant :

— un dispositif de multiplexage (MPX) recevant les termes dits caractéristiques ; et,

— un dispositif de mise en format (15) recevant les taux de bits ($n_{(i)}$) alloués aux sous-bandes et contrôlant le dispositif de multiplexage pour y commander la distribution des bits de codage des échantillons de signal au sein des zones du format de macro-échantillon multi-taux.

9. Procédé de transmission numérique permettant de concentrer sur une même voie de transmission, les signaux d'origine vocale provenant de plusieurs sources, le signal de chacune desdites sources étant codé selon le procédé de l'une des revendications 1 à 8, ledit procédé de transmission étant caractérisé en ce qu'il comprend en outre les opérations suivantes :

— mesure de l'activité relative de chacune desdites sources par rapport aux autres sources ;

— choix du taux de bits à affecter au codage du signal fourni par chaque source en fonction de ladite activité relative mesurée ;

— construction de macro-échantillons tronqués par abandon éventuel des bits de zones prédéterminées des macro-échantillons multi-taux en fonction dudit taux de bits choisis pour chaque source ; et

— multiplexage des macro-échantillons tronqués, en vue de transmission sur ladite voie de transmission.

10. Procédé de transmission numérique selon la revendication 9, caractérisé en ce que le taux de bits à affecter au codage du signal de chaque source est défini dynamiquement en fonction de l'activité relative de ladite source de manière telle que la somme des taux de bits alloués aux différentes sources soit égale à une fraction prédéterminée de la capacité de transmission de ladite voie.

11. Procédé selon la revendication 10 caractérisé en ce que ladite mesure d'activité relative est basée sur une comparaison de termes caractéristiques de BCPCM.

12. Procédé de transmission numérique selon la revendication 11, caractérisé en ce que ladite activité relative des sources de signaux vocaux est mesurée à partir des termes caractéristiques les plus grands en valeur absolue pour chaque tronçon de signal.

13. Procédé de transmission numérique selon l'une des revendications 9 à 12 caractérisé en ce que le codage du signal de chaque source est du type dit prédictif fournissant une information relative à l'énergie contenue dans au moins une fraction du spectre du signal vocal traité.

14. Procédé de transmission numérique selon la revendication 14 caractérisé en ce que ladite activité relative des sources de signaux vocaux est mesurée à partir d'informations combinant à la fois des énergies dans une fraction du spectre du signal vocal et des termes caractéristiques de codage BCPCM.

**Claims**

1. A so-called multi-rate coding method for coding an electrical signal in accordance with a technique whereby rates can be changed by the simple expedient of dropping bits, said signal being sampled at a predetermined frequency and subband coded by dynamically allocating the coding bits to the subbands, the coding rate for all subbands being selected as a function of the highest rate in a set of predetermined rates, said method being characterized in that it includes the steps of :

— generating a so-called macro-sample format for regrouping the bits obtained by coding all samples taken in the various subbands considered at the same sampling instant, said format being split into a number of predetermined fields as a function of said set of coding bit rates ;

— generating at each sampling instant a so-called multi-rate macro-sample by distributing among said fields the bits obtained by coding each sample in said macro-sample, taking into account the weight of said bits and their distribution among the subbands, for coding at each of said rates in said set ; said macro-sample being subsequently truncated, as necessary, by dropping predetermined fields as a function of said selected bit rate.

2. A multi-rate coding method according to claim 1, wherein the signal is coded by additionally using so-called BCPCM techniques for coding the signal by blocks of successive samples representing a predetermined signal segment, each of said segments supplying a so-called characteristic term which is a function of the dynamics of the segment and with respect to which the samples of said segment are coded, said method being characterized in that :

16

— a predetermined number of bits is reserved for coding the characteristic terms of each block of samples, said rates in said set of predetermined rates being reduced accordingly ;

— the bits resulting from the coding of the characteristic terms of each block are regrouped within the same macro-sample field called characteristic block field.

3. A multi-rate coding method according to claim 2, characterized in that each coded block of samples is organized so as to comprise the characteristic block field followed by macro-samples of the same block.

4. A coding method according to claim 2, further characterized in that each block of samples is built in accordance with a format that regroups the bits of similar fields of all macro-samples of the same block of samples.

5. A digital coding method according to any one of claims 2 to 4, characterized in that said BCPCM type of subband coding covers the whole frequency spectrum of a voice signal to be transmitted.

6. A coding method according to any one of claims 2 to 4, characterized in that said subband coding covers a portion of the frequency spectrum of a voice signal, said portion being defined in the context of a predictive type of coding of the original voice signal.

7. A coding method according to claim 6, characterized in that said portion of the spectrum corresponds to the baseband of the voice signal.

8. A digital coding device for implementing the method of any one of claims 2 to 7 and in which the bits resulting from the BCPCM subband coding are fed to means for building said multi-rate macro-samples comprising :

— a multiplexing device (MPX) for receiving said characteristic terms ; and

— a formatting device (15) for receiving the bit rates $(n_{(i)})$ allocated to the subbands and for controlling the multiplexing device to control the distribution of the signal sample coding bits among the fields of the multi-rate macro-sample format.

9. A digital transmission method for concentrating onto the same transmission path the voice signals from various sources, the signal from each of said sources being coded according to the method of any one of claims 1 to 8, said transmission method being characterized in that it further comprises the steps of :

— measuring the relative activity of each of said sources with respect to the other sources ;

— selecting the bit rate to be allocated for coding the signal provided by each source as a function of said measured relative activity ;

— building truncated macro-samples by dropping, as necessary, the bits in predetermined fields of multi-rate macro-samples as a function of said bit rate selected for each source ; and

— multiplexing the truncated macro-samples for transmission there of over said transmission path.

10. A digital transmission method according to claim 9, characterized in that the bit rate to be allocated for coding the signal from each source is dynamically defined as a function of the relative activity of said source so that the sum of the bit rates allocated to the various sources will be equal to a predetermined fraction of the transmission capacity of said path.

11. A method according to claim 10, characterized in that said relative activity measurement is based upon a comparison of the BCPCM characteristic terms.

12. A digital transmission method according to claim 11, characterized in that said relative activity of the voice signal sources is measured from the highest absolute values of the characteristic terms for each signal segment.

13. A digital transmission method according to any one of claims 9 to 12, characterized in that the coding of the signal from each source is of the predictive type providing an information item relating to the energy contents of at least a portion of the spectrum of the voice signal being processed.

14. A digital transmission method according to claim 13, characterized in that said measurement of the relative activity of the voice signal sources is derived from information combining the energy contents of a portion of the voice signal spectrum with the characteristic terms of the BCPCM coding.

**Ansprüche**

1. Sogenanntes Mehrbitraten-Codierverfahren für ein elektrisches Signal gemäss einem Verfahren, das es einfach dadurch ermöglicht, dass man auf Bits verzichtet, von einer Bitrate zu einer anderen Bitrate überzugehen, wobei das Signal bei einer vorbestimmten Abtastfrequenz abgetastet und gemäss den sogenannten Techniken der « dynamischen Zuweisung der Codierbits zwischen den Unterbändern » in Unterbändern kodiert ist, wobei die Bitrate für die Codierung bezogen auf die gesamten Unterbänder in Abhängigkeit von der grössten Bitrate aus einer Gruppe von vorbestimmten Bitraten gewählt ist, wobei das Verfahren dadurch gekennzeichnet ist, dass es die folgenden Schritte aufweist :

— Aufbau eines sogenannten Makroabtastwert-Formats, der dazu bezweckt ist, die Bits zusammenzufassen, die aus der Codierung der gesamten Abtastwerte für die mehreren in einem gleichen Zeitpunkt des Abtastvorgangs berücksichtigten Unterbänder gewonnen wurden, wobei der Format in einer Anzahl von vorbestimmten Zonen in Abhängigkeit von dieser Gruppe von Codier-Bitraten zerlegt ist ;

— Herstellung eines sogenannten Mehrbitraten-Makroabtastwertes an jedem Zeitpunkt des Abtastvorgangs, wodurch die Bits, die aus der Codierung jedes in dem Makroabtastwert enthaltenen Abtastwertes gewonnen wurden, in den Zonen verteilt sind, wobei die Bedeutung dieser Bits und derer Verteilung zwischen den Unterbändern in Rücksicht genommen sind, zum Zweck einer Codierung bei jeder Bitrate aus der Gruppe der Bitraten ;

wobei anschliessend der makroabtastwert in Abhängigkeit von der aus der Gruppe von den vorbestimmten Bitraten gewählten Bitrate von einigen Zonen eventuell abgekürzt ist.

2. Mehrbitraten-Codierverfahren nach Anspruch 1, wobei die Codierung des Signals ausserdem die sogenannten BCPCM-Techniken verwendet, nach denen das zu codierende Signal als aufeinanderfolgende Abtastwerten-Blöcke betrachtet ist, wobei jeder Block ein vorbestimmtes abgeschnittenes Stück des Signals darstellt, wobei jedes Stück einen als charakteristisch bezeichneten Term versorgt, der von der Dynamik des abgeschnittenen Stücks abhängt, und im Verhältnis zu dem die Abtastwerte des abgeschnittenen Stückes codiert sind, wobei das Verfahren dadurch gekennzeichnet ist, dass

— eine vorbestimmte Anzahl von Bits für die Codierung der für jeden Block von Abtastwerten charakteristischen Terme bestimmt ist, wobei die Bitraten in der Gruppe von Bitraten um diese Anzahl reduziert sind ;

— die aus der Codierung der für jeden Block charakteristischen Terme gewonnenen Bits innerhalb einer gleichen Zone des Makroabtastwertes, als charakteristische Zone des Blocks bezeichnet, zusammengefassen sind.

3. Mehrbitraten-Codierverfahren nach Anspruch 2, dadurch gekennzeichnet, dass jeder codierte Block von Abtastwerten derart organisiert ist, dass er die charakteristische Zone des Blocks und die ihr folgenden Makroabtastwerte des selben Blocks enthält.

4. Mehrbitraten-Codierverfahren nach Anspruch 2, weiterhin dadurch gekennzeichnet, dass jeder Block von Abtastwerten jenach einem Format aufgebaut ist, der die den ähnlichen Zonen aller Makroabtastwerte eines selben Abtastwerten-Blocks entsprechenden Bits zusammenfasst.

5. Numerisches Codierverfahren nach einem der Ansprüche 2 bis 4, dadurch gekennzeichnet, dass die Codierung des BCPCM-Typs in Unterbändern auf das ganze Frequenzspektrum eines zu übertragenden stimmhaften Signals angewendet ist.

6. Mehrbitraten-Codierverfahren nach einem der Ansprüche 2 bis 4, dadurch gekennzeichnet, dass die Codierung in Unterbändern auf einen Bruchteil des Frequenzspektrums eines stimmhaften Signals angewendet ist, wobei dieser Bruchteil einer prädiktivgerechten Codierung des stimmhaften Signals entsprechend definiert ist.

7. Mehrbitraten-Codierverfahren nach Anspruch 6, dadurch gekennzeichnet, dass der Bruchteil des Spektrums dem sogenannten Basisband des stimmhaften Signals entspricht.

8. Codierverfahren zur Durchführung eines unter den Ansprüchen 2 bis 7, wobei die aus der BCPCM-Codierung in Unterbändern gewonnenen Bits von Mitteln zum Aufbau von Mehrbitraten-Makroabtastwerten verarbeitet sind, wobei diese Mittel einschliessen :

— eine Multiplex-Einrichtung (MPX), der die sogenannten charakteristischen Terme zugeführt sind ; und

— eine Formatisierungseinrichtung (15), die die den Unterbändern zugewiesenen Bitraten ($n_{(i)}$) annimt und die Multiplex-Einrichtung so steuert, dass sie für die Verteilung der den Signalabtastwerten entsprechenden Codierbits innerhalb der Zonen des Formats der Mehrbitraten-Makroabtastwerte bei dieser Multiplex-Einrichtung sorgt.

9. Numerisches Übertragungsverfahren, das es ermöglicht, die stimmhaften aus mehreren Quellen stammenden Signale auf einen gleichen Übertragungsweg zu konzentrieren, wobei das Signal für jede Quelle gemäss dem in einem der Ansprüche 1 bis 8 beschriebenen Verfahren codiert ist, wobei das Übertragungsverfahren dadurch gekennzeichnet ist, dass es ausserdem die folgenden Schritte aufweist :

— Messung der relativen Aktivität jeder der Quellen im Verhältnis zu den anderen Quellen ;

— Auswahl der Bitrate, die der Codierung des aus jeder Quelle abgegebenen Signals in Abhängigkeit von der genannten gemessenen relativen Aktivität zu zuweisen ist ;

— Herstellung von Makroabtastwerten, die durch das eventuelle Verzichten auf vorbestimmten Zonen von Mehrbitraten-Makroabtastwerten entsprechende Bits in Abhängigkeit von der für jede Quelle gewählten Bitrate abgekürzt sind ; und

— multiplexieren der abgekürzten Makroabtastwerte zum Zwecke derer Übertragung auf dem Übertragungsweg.

10. Numerisches Übertragungsverfahren nach Anspruch 9, dadurch gekennzeichnet, dass die für die Codierung des Signals aus jeder Quelle zuzuweisende Bitrate in Abhängigkeit von der relativen Aktivität der Quelle dynamisch so bestimmt ist, dass die Summe der den verschiedenen Quellen zugewiesenen Bitraten einem vorbestimmten Bruchteil der Übertragungskapazität dieses Übertragungswegs gleich ist.

11. Verfahren nach Anspruch 10, dadurch gekennzeichnet, dass die relative Aktivitätsmessung auf einen Vergleich zwischen den charakteristischen BCPCM-Termen beruht.

12. Numerisches Übertragungsverfahren nach Anspruch 11, dadurch gekennzeichnet, dass die relative Aktivität der Quellen der stimmhaften Signale auf Grund der charakteristischen Termen mit den grössten absoluten Werten bei jedem Bruchteil des Signals gemessen ist.

13. Numerisches Übertragungsverfahren nach einem der Ansprüche 9 bis 12, dadurch gekennzeichnet, dass die Codierung des Signals für jede Quelle prädiktiv ist, indem sie eine Information bezüglich der

**0 085 820**

Energie liefert, die in mindestens einem Bruchteil des Spektrums des verarbeiteten stimmhaften Signals enthalten ist.

14. Numerisches Übertragungsverfahren nach Anspruch 14, dadurch gekennzeichnet, dass die relative Aktivität der Quellen der stimmhaften Signale auf Grund der Informationen gemessen ist, die gleichzeitig die Energien in einem Bruchteil des Spektrums des stimmhaften Signals und die charakteristischen Terme der BCPCM-Codierung zusammenfassen.

F I G . 1

# FIG.2

CARACTERIS-TIQUES DE BLOC

$1^{er}$ MACRO ECHANTILLON → ← $2^{eme}$ MACRO ECHANTILLON → ← $3^{eme}$ M . E

| $Z_1$ | $Z_{2,1}$ | $Z_{3,1}$ | $Z_{4,1}$ | $Z_{5,1}$ | $Z_{2,2}$ | $Z_{3,2}$ | $Z_{4,2}$ | $Z_{5,2}$ | $Z_{2,3}$ | $Z_{3,3}$ |

# FIG.3

$Z_{2,1}$ → ← $Z_{3,1}$ → ← $Z_{4,1}$ → ← $Z_{5,1}$

| $x^5_1$ $x^4_1$ $x^4_2$ $x^5_3$ $x^4_3$ $x^5_4$ | $x^3_1$ $x^3_2$ $x^3_3$ $x^4_4$ $x^3_4$ $x^3_5$ $x^3_7$ $x^3_8$ | $x^2_1$ $x^2_2$ $x^2_3$ $x^2_4$ $x^2_5$ $x^2_6$ $x^2_7$ $x^2_8$ | $x^1_1$ $x^1_2$ $x^1_3$ $x^1_4$ $x^1_5$ $x^1_6$ $x^1_7$ $x^1_8$ |

# FIG.3A

$P_2$ → ← $P_3$ → ← $P_4$ → ← $P_5$

| $Z_1$ | $Z_{2,1}, Z_{2,2}, Z_{2,3}$ --- $Z_{2,16}$ | $Z_{3,1}, Z_{3,2}$ ---- $Z_{3,16}$ | $Z_{4,1}, Z_{4,2}$ --- $Z_{4,16}$ | $Z_{5,1}$ ------- $Z_{5,16}$ |

FIG.4

# FIG.5

PORT 1 — S B 1 — S ( 1 , j , 1 )
S ( 2 , j , 1 )

S ( p , j , 1 )

PORT 2 — S B 2 — S ( 1 , j , 2 )
S ( 2 , j , 2 )

S ( p , j , 2 )

PORT L — S B L — S ( 1 , j , L )
S ( 2 , j , L )

S ( p , j , L )

# FIG.6

# FIG.7